# EUROPEAN PATENT APPLICATION

(11) **EP 4 775 333 A1**
(43) Date of publication of application: **15.07.2026**
(21) Application number: 25813726.4
(22) Date of filing: 31.07.2025
(51) Int. Cl.: B22F 10/85, B22F 10/28, B22F 10/36, B22F 10/38, B33Y 10/00, B33Y 30/00, B33Y 50/02, B33Y 80/00

(54) **THREE-DIMENSIONAL MODELING METHOD, PROGRAM, AND STRUCTURE**

(30) Priority: 09.08.2024 JP 2024134115
(71) Applicant: Matsuura Machinery Corporation, Fukui City, Fukui 910-8530 (JP); National University Corporation Kanazawa University, Ishikawa 920-1192 (JP)
(72) Inventor: YOSHIDA, Mitsuyoshi, Fukui 910-8530 (JP); FURUMOTO, Tatsuaki, Ishikawa 920-1192 (JP)
(74) Representative: Wenzel Nemetzade Warthmüller Patentanwälte Part mbB
(86) International application number: PCT/JP2025/027142
(87) International publication number: WO 2026/034333

(57) **Abstract**

An object is to suppress deformation occurring in a shaping process with regard to a method of three-dimensional shaping by stacking thin layers that are formed by fusing powder and solidifying the fused powder. A three-dimensional shaping apparatus of a powder bed system irradiates metal powder with laser to fuse the powder, solidifies the fused powder to form a thin layer, and stacks these thin layers for three-dimensional shaping. In this process, changing an energy amount in laser irradiation causes high density layers L21 having a high shaping density and porous layers L22 having a low shaping density to be mixed in formation. The high density layers and the porous layers may be formed in any of various thicknesses (test pieces P2 to P4). The high density layers and the porous layers may be formed alternately (test pieces P6 to P9). Such mixed presence of the high density layers and the porous layers in formation suppresses distortion without decreasing the mechanical strength of a shaped object.

## Description

### Technical Field

The present disclosure relates to a method of three-dimensional shaping by stacking thin layers, which are formed by fusing powder and solidifying the fused powder, and more specifically relates to a technique of reducing a residual stress and suppressing deformation that occurs in a shaping process.

### Background Art

A technique of three-dimensional shaping by fusing powder, such as metal powder, and solidifying the fused powder has been known as one of additive manufacturing technique that performs three-dimensional shaping by stacking thin layers of predetermined thicknesses. This technique includes a variety of known methods, for example, a PDF (powder bed fusion) system, a BJT (binder jetting) system, and a DED (directed energy deposition) system.

In such three-dimensional shaping, it has been known that a residual stress caused by heating in a fusing process and cooling in a solidifying process may lead to the occurrence of delamination, the occurrence of a crack, or a deformation or a damage of a shaped object. For example, a technique of dividing a shaped object into small cells and irradiating the small cells with laser, a technique of using a base plate having a close coefficient of linear expansion to that of powder in the PBF system, a technique of re-irradiating shaped layers with laser have been proposed, with the purpose of avoiding or relieving the above problems.

PTL 1 discloses a technique of embedding a block component that is provided separately, inside of a shaped object in a three-dimensional shaping process, with a view to reducing a thermal deformation and thereby preventing the occurrence of a curvature deformation. A technique disclosed in PTL 2 does not directly aim to reduce a heat-based residual stress but is a technique of providing a boundary inside of a shaped object. More specifically, PTL 2 discloses a technique of modulating a laser module such as to form a solid boundary layer and a porous layer configured inside of the boundary layer, with regard to a method of fusing and solidifying powder and generating a composite material as a combination of a metal material, a plastic material, and a ceramic material.

### Citation List

### Patent Literature

PTL 1: Japanese Patent No. 200-190086A
PTL 2: Japanese Patent No. 2022-33816A

### Summary

### Technical Problem

The problems of the residual stress in three-dimensional shaping, however, have not yet been fully solved by the prior art. Especially, no techniques for suppressing a distortion or the like accompanied with the residual stress and implementing the requirements for the strength of a shaped object and the shaping speed with good balance have been established in three-dimensional shaping. The present disclosure aims to solve such problems.

### Solution to Problem

According to one aspect of the present disclosure, there is provided a three-dimensional shaping method of forming a three-dimensional shaped object. The three-dimensional shaping method comprises: (a) a step of defining a shape of each thin layer, in order to form the shaped object by thin layers of predetermined thicknesses; (b) a step of providing a predetermined energy amount to powder to fuse the powder and solidifying the fused powder to form a thin layer according to the defined shape; (c) a step of repeating the step (b) to stack a next thin layer on a formed thin layer; and (d) a step of controlling the energy amount in each repetition of the step (b), such as to cause two or more different layer areas having different energy amounts to be mixed in a direction of stacking.

The lower energy amount provided to form a thin layer decreases the shaping density in a resulting shaped object and provides a porous structure. The higher energy amount, on the other hand, provides a solid structure. In this manner, the energy amount provided affects the density of a formed thin layer. The porous structure decreases the mechanical strength but tends to cause a relatively small residual stress. The more solid structure increases the mechanical strength and tends to increase the residual stress.

The configuration of the present disclosure controls the energy amount for each thin layer and enables layers having different shaping densities, i.e., layers having different mechanical strengths and different residual stresses, to be stacked. The configuration of the present disclosure can thus suppress a distortion of a shaped object due to the residual stress.

In the case where energy is given by laser irradiation or the like, the method of the present disclosure may control each of the intensity of laser irradiation, the irradiation speed, the irradiation area of laser, and other factors alone or in combination, as the control of the energy amount.

The expression of "controlling the energy amount for each thin layer" means that an energy amount as the standard is to be controlled for each thin layer. The energy amount may further be controlled for each region of one thin layer.

The term "for each thin layer" does not necessarily mean that the energy amount is to be changed in formation of each thin layer. A plurality of adjacent thin layers may be formed with an identical energy amount.

The layer area means an area comprised of one or a plurality of thin layers formed with an identical energy amount, i.e., an area comprised of one or a plurality of thin layers that are expected to have equivalent mechanical strengths and residual stresses. For example, in a configuration of changing the energy amount every time five thin layers are formed, the five thin layers form one layer area.

The configuration of the present disclosure is applicable to a variety of three-dimensional shaping methods of fusing and solidifying powder, such as a PBF (powder bed fusion) system, a BJT (binder jetting) system or a DED (directed energy deposition) system.

In the three-dimensional shaping method according to the above aspect of the present disclosure, the step (d) may form a plurality of the thin layers with a first energy amount and subsequently change over the energy amount to a second energy amount.

As described above, the energy amount may be changed every time one thin layer is formed or may be changed after formation of a plurality of thin layers like this aspect. In the three-dimensional shaping method of this aspect, a plurality of thin layers formed with the same energy amount form one layer area. This aspect does not need to change the energy amount for each thin layer and thereby shortens the total shaping time. Furthermore, this aspect enables a layer area to be formed in a certain degree of thickness and thereby reduces the effects of a variation in the formation state of the respective thin layers on the mechanical strength and the residual stress of the entire shaped object.

In the three-dimensional shaping method of this aspect, the number of thin layers formed with the first energy amount may be determined arbitrarily. The number of thin layers formed with the second energy amount may be one or multiple. It is not necessary that the number of layers formed with the first energy amount is equal to the number of layers formed with the second energy amount.

In the three-dimensional shaping method of this aspect, three or more different energy amounts may be applied for shaping.

In the three-dimensional shaping method according to the above aspect of the present disclosure, the step (d) may change over the energy amount at least twice in a shaping process.

The three-dimensional shaping method of this aspect causes three layer areas having different energy amounts to be stacked. This configuration enables a diversity of layer areas having different properties including the mechanical strength and the residual stress to be formed and enables the characteristics of the entire shaped object to be flexibly adjusted.

**In** the three-dimensional shaping method of this aspect, the three layer areas may have different energy amounts. In another example, a layer area of the first energy amount, a layer area of the second energy amount and a layer area of the first energy amount may be stacked.

**In** the three-dimensional shaping method according to the above aspect of the present disclosure, the step (d) may control the energy amount, such that a first layer area comprised of thin layers formed with the first energy amount and a second layer area comprised of thin layers formed with the second energy amount are alternately stacked.

**In** the three-dimensional shaping method of this aspect, any number of the first layer area and any number of the second layer areas may be stacked alternately. The thickness of each layer area may be fixed or may be varied.

The three-dimensional shaping method according to the above aspect of the present disclosure may further comprise (e) setting the energy amount that is to be provided to each thin layer, according to a mechanical strength required for the shaped object, wherein the step (d) may control the energy amount according to a result of setting in the step (e).

The three-dimensional shaping method according to the present disclosure performs shaping in such a manner that layer areas having different shaping densities, i.e., layer areas having different properties such as different mechanical strengths and different residual stresses, are mixed. The configuration of decreasing the energy amount and increasing the layer area having the low mechanical strength lowers the mechanical strength of the entire shaped object. The configuration of increasing the energy amount and increasing the layer area having the high mechanical strength, on the other hand, raises the mechanical strength of the entire shaped object. In this manner, the energy amount affects the mechanical strength of the shaped object.

The configuration of the above aspect enables the energy amount to be determined according to the mechanical strength required for the shaped object and thereby allows for shaping such that the entire shaped object meets the requirement of the mechanical strength.

The three-dimensional shaping method according to the above aspect of the present disclosure may further comprise (f) a step of setting the energy amount that is to be provided to each thin layer, according to an allowable range of distortion that is allowed for the shaped object, wherein the step (d) may control the energy amount according to a result of setting of the step (f).

In the three-dimensional shaping method according to the present disclosure, increasing the layer area having the low density and the low residual stress reduces the distortion of the entire shaped object. Increasing the layer area having the high density and the high residual stress, on the other hand, increases the distortion of the entire shaped object. In this manner, the energy amount affects the density of the thin layers and also affects the distortion due to the residual stress of the shaped object.

The configuration of the above aspect enables the energy amount to be determined according to the allowable range of distortion that is allowed for the shaped object. This accordingly allows for shaping such that the distortion of the entire shaped object meets the requirement.

In general, the layer area having the high mechanical strength tends to have the high residual stress, while the layer area having the low mechanical strength tends to have the low residual stress. Accordingly, the configuration of determining the energy amount by taking into account both the requirements of the mechanical strength and the residual stress of the shaped object allows for shaping such as to meet both the requirements.

In the three-dimensional shaping method according to the above aspect of the present disclosure, it is preferable to apply the step (b) to a three-dimensional shaping method of using metal powder to stack the thin layers.

The aspects of the present disclosure may be applied to a variety of shaping methods of fusing and solidifying not only the metal powder but other powders. The problem of the residual stress accompanied with fusing is, however, especially important in the shaping method that uses the metal powder. The aspects of the present disclosure are accordingly especially effective for three-dimensional shaping that uses metal powder.

The three-dimensional shaping method may not necessarily be provided with all the variety of features described above as the aspects of the present disclosure, and these features may be partly omitted or combined appropriately. The present disclosure may be implemented by various aspects, other than the aspects of the three-dimensional shaping method described above.

For example, according to one aspect of the present disclosure, there is provided a three-dimensional shaping apparatus configured to form a three-dimensional shaped object. The three-dimensional shaping apparatus comprises an input portion configured to read shape data of each thin layer in order to form the shaped object by thin layers of predetermined thicknesses; a thin layer forming portion configured to provide a predetermined energy amount to powder to fuse the powder and solidify the fused powder to form a thin layer according to the shape data; a stacking portion configured to move the thin layer forming portion relative to a formed thin layer, such as to form a next thin layer on the formed thin layer; and a controller configured to control the energy amount that is provided by the thin layer forming portion, such as to cause two or more different layer areas having different energy amounts to be mixed in a direction of stacking.

The three-dimensional shaping apparatus according to the above aspect of the present disclosure enables thin layers to be formed by controlling the energy amount and thereby implements the three-dimensional shaping method of the present disclosure described above. Any of the various features described above as the various aspect of the three-dimensional shaping method may also be applied to the three-dimensional shaping apparatus of the present disclosure.

According to another aspect of the present disclosure, in a computer of controlling a three-dimensional shaping apparatus configured to form a three-dimensional shaped object, there is provided a program that causes the computer to execute: (a) a step of receiving an input of a shape of each thin layer, in order to form the shaped object by thin layers of predetermined thicknesses; (b) a step of controlling such as to provide a predetermined energy amount to powder to fuse the powder and such as to solidify the fused powder to form a thin layer according to the defined shape; (c) a step of controlling to repeat the step (b) and thereby stack a next thin layer on a formed thin layer; and (d) a step of controlling the energy amount in each repetition of the step (b), such as to cause two or more different layer areas having different energy amounts to be mixed in a direction of stacking.

According to another aspect of the present disclosure, there is provided a shaped object that is manufactured by a three-dimensional shaping method comprising: (a) a step of defining a shape of each thin layer, in order to form a shaped object by thin layers of predetermined thicknesses; (b) a step of providing a predetermined energy amount to powder to fuse the powder and solidifying the fused powder to form a thin layer according to the defined shape; (c) a step of repeating the step (b) to stack a next thin layer on a formed thin layer; and (d) a step of controlling the energy amount in each repetition of the step (b), such as to cause two or more different layer areas having different energy amounts to be mixed in a direction of stacking.

According to another aspect, there is provided a profile setting method that causes a computer to set a profile of energy amount for a three-dimensional shaping apparatus configured to form a three-dimensional shaped object by stacking thin layers, which are formed by providing a predetermined energy amount to powder to fuse the powder and solidifying the fused powder. The profile setting method comprises: a step of reading a shape of a shaped object that is formed previously, a profile of energy amount that is provided to form respective thin layers in a shaping process of the shaped object, and shaping data that stores either one or both of a magnitude of distortion occurring in the shaped object and a mechanical strength required for the shaped object; a step of obtaining a learning model by machine learning regression analysis with the shape and either one or both of the magnitude of distortion and the mechanical strength as explanatory variables and the profile as an objective variable, based on the shaping data; a step of inputting a shape of a shaped object that is to be formed, as well as requirements corresponding to the learning model out of requirements for an allowable magnitude of distortion and mechanical strength; and a step of using the learning model and setting the profile of energy amount in a shaping process, based on the input.

The method of this aspect is a method of setting a profile of energy amounts that are to be provided to respective thin layers by utilizing machine learning. This takes advantage of the past results of shaping and enables a profile that can satisfy requirements such as the mechanical strength and the distortion to be readily set. The requirements may be set for both of the magnitude of distortion and the mechanical strength or may be set for either one of them.

The method of the above aspect may employ a constraint condition, for example, a condition that all layer areas are to be configured by a fixed number of thin layers or a condition that a usable energy amount is to be selected among several options set in advance. This enables a learning model to be readily obtained by machine learning.

The "shape of the shaped object" used in a learning process may be represented by the thickness in the stacking direction. The distortion may be given as a distortion in the stacking direction, an in-plane distortion of each layer or the like. As shown by these examples, the explanatory variables and the objective variable may be given by any of various aspects.

### Brief Description of Drawings

Fig. 1 is an explanatory diagram schematically illustrating the configuration of a three-dimensional shaping apparatus according to one embodiment;
Fig. 2 is an explanatory diagram illustrating examples of shaping according to the embodiment;
Fig. 3 is an explanatory diagram illustrating results of an experiment for a tensile strength;
Fig. 4 is an explanatory diagram illustrating results of experiments for the tensile strength, a deformation amount, and a shaping speed;
Fig. 5 is a flowchart showing a shaping process; and
Fig. 6 is a flowchart showing a learning model generation process and a profile setting process.

### Description of Embodiments

An example of shaping by a powder bed fusion system is described as an embodiment of the present disclosure. The present disclosure is, however, applicable to not only this system but a variety of other shaping techniques of fusing and solidifying powder, such as a BJT (binder jetting) system or a DED (directed energy deposition) system.

### A. Configuration of Apparatus

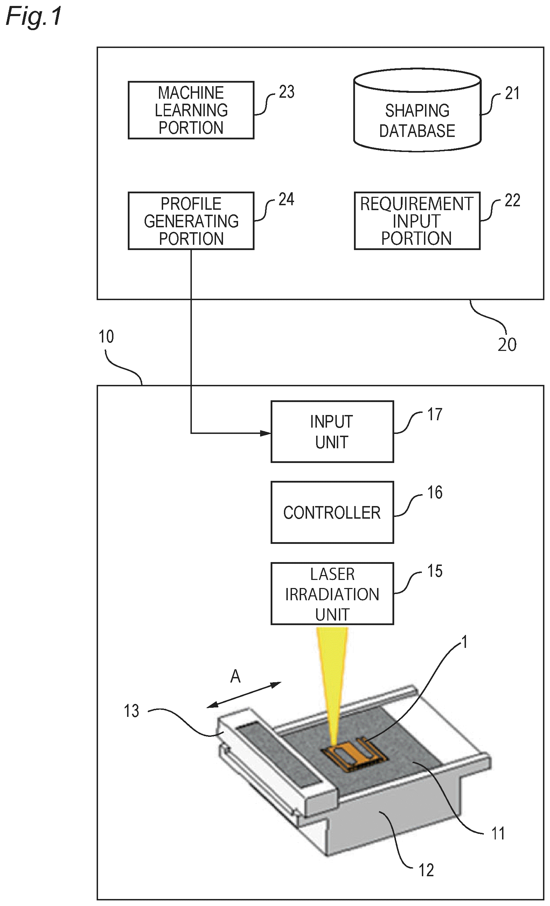

Fig. 1 is an explanatory diagram schematically illustrating the configuration of a three-dimensional shaping apparatus according to one embodiment.

A three-dimensional shaping apparatus 10 of the embodiment includes a shaping table 11 configured to form a shaped object and a recoater 13 configured to move back and forth on the shaping table 11 as shown by an arrow A. When the recoater 13 moves back and forth in a shaping process, the surface of the shaping table 11 is covered with metal powder used for shaping to a substantially uniform thickness.

The three-dimensional shaping apparatus 10 is provided with a laser irradiation unit 15 as a mechanism of heating and fusing this metal powder. The laser irradiation unit 15 includes a laser light source and a mechanism configured to move an irradiation location of the laser light source according to the shape of the shaped object. The metal powder is fused in the location irradiated with laser by the laser irradiation unit 15 and is subsequently solidified when being cooled down, so as to form a thin layer that configures part of the shaped object.

The three-dimensional shaping apparatus 10 is also provided with a moving mechanism 12 configured to move the shaping table 11 downward. After formation of a thin layer, the shaping table 11 is moved down by the thickness of one layer. A next layer is then stacked on the previously formed thin layer by performing the spray of the metal by the recoater 13 and the fusion and the solidification by the laser irradiation unit 15.

The three-dimensional shaping apparatus 10 of the embodiment thus enables a three-dimensional shaped object to be formed by forming thin layers and repeatedly stacking the layers as described above.

The three-dimensional shaping apparatus 10 of the embodiment changes over the amount of energy that is to be supplied to the metal powder by laser irradiation to form a thin layer in the process of shaping described above. More specifically, the embodiment described below selectively uses two different energy amounts for irradiation: irradiation with an energy amount of forming a thin layer at a high density, such as a level of metal in a solid state (hereinafter this irradiation condition with such an energy amount is called "high density condition") and irradiation with an energy amount of forming a thin layer at a low shaping density (hereinafter this irradiation condition with such an energy amount is called "porous condition"). The thin layer formed in the porous condition is often a thin layer in a porous state but is not necessary porous.

According to the embodiment, information for specifying the energy amount of laser irradiation for each thin layer is called energy amount profile. The profile may be set by any of various methods, for example, a method of specifying an energy amount for each one layer or a method of specifying an energy amount for a predetermined number of thin layers as a unit.

Any of various methods may also be employed to control the energy amount according to the profile: for example, a method of changing the scan speed of laser irradiation, a method of changing the intensity of laser irradiation, a method of changing the spot area of laser irradiation, or a combination thereof. This embodiment employs the method of changing the scan speed of laser irradiation.

The three-dimensional shaping apparatus 10 is provided with an input unit 17 and a controller 16, with a view to performing the shaping and the control of the energy amount described above. These components may be configured by a hardware configuration. According to this embodiment, however, these components are configured by a software configuration by incorporation of computer programs for implementing the respective functions into a computer provided with a CPU and memories.

The input unit 17 reads shape data of a shaped object. The shaping process needs the shape of each of thin layers that are stacked, so that the shape data may be shape data of each of layers forming a shaped object. In another example, the three-dimensional shaping apparatus 10 may read data indicating a three-dimensional shape of a shaped object and generate shape data for each thin layer.

For example, a requirement for the mechanical strength of the shaped object and a requirement for the allowable amount of distortion in the shaping process are input along with the shape data into the input unit 17.

The profile of energy amount of laser irradiation is also input into the input unit 17. The profile may be set and input by an operator or may be set by utilizing an artificial intelligence.

The controller 16 controls the operations of the three-dimensional shaping apparatus 10, so as to control the laser irradiation by the laser irradiation unit 15, i.e., a supply amount of energy, and thereby perform shaping of a shaped object where layers in the high density condition and layers in the porous condition are mixed. As described above, the controller16 may be configured by a software configuration by incorporation of a program into the computer. This program may be, for example, a program that causes the computer to perform:
(a) a step of receiving an input of a shape of each layer, such as to form a shaped object by thin layers of predetermined thicknesses;
(b) a step of performing control such as to provide a predetermined energy amount to powder to fuse the powder and such as to solidify the fused powder to form a thin layer according to the shape;
(c) a step of repeating the step (b) and performing control to stack a next thin layer on a formed thin layer; and
(d) a step of controlling the energy amount in each repetition of the step (b) to cause two or more different layer areas having different energy amounts are mixed in a direction of staking.

This program may be installed in advance in the controller16 or may be solely distributed, for example, distributed in the form of storage in a storage medium or provided via a communication line.

The configuration of this embodiment sets the profile by utilizing an artificial intelligence. Fig. 1 also illustrates the configuration of a profile setting device 20 to set the profile. The respective components illustrated in the drawing may be provided by a hardware configuration. According to the embodiment, however, these components are configured by a software configuration by incorporation of computer programs for implementing the respective functions into the computer.

In the illustrated example, the profile setting device 20 is shown as a single device. The profile setting device 20 may, however, be configured by connecting a plurality of computers, servers and the like via a network to provide the respective functions.

A shaping database 21 provided in the profile setting device 20 is configured to store shaping data indicating past shaping results. The contents of the shaping data may be determined arbitrarily but may include, for example, a shape of a shaped object, a mechanical strength of the shaped object, a magnitude of distortion in a shaping process, and a profile used for shaping. The shape of a shaped object may be a three-dimensional shape or may be represented by a parameter, for example, a thickness in a stacking direction. Any of various indications including a tensile strength and a bending strength may be used as the mechanical strength. The magnitude of distortion may be indicated by a parameter, such as a distortion in the stacking direction or a distortion in a layer.

A machine learning portion 23 is configured to use the shaping database 21 and generate a learning model by machine learning regression. The purpose of machine learning is to generate a learning model that provides a profile implementing requirements, such as a mechanical strength and a magnitude of distortion, with regard to a shaped object to be formed in the future, when such requirements are specified. Accordingly, machine learning is performed with a shape, a mechanical strength, a distortion and the like as explanatory variables and a profile as an objective variable. The machine learning may be performed according to any of various algorithms.

The generated learning model is stored in the profile setting device 20.

A requirement input portion 22 is configured to input requirements, such as a mechanical strength and an allowable range of distortion with regard to a shaped object to be formed. It is preferable that the requirements have the same format as that of the shaping data used for machine learning by the machine learning portion 23.

A profile generating portion 24 is configured to generate a profile of energy amounts to be supplied to the shaped object by using the learning model generated by the machine learning portion 23.

It is not necessary that the machine learning and the generation of the profile are conducted simultaneously. An available procedure may generate a learning model in advance by machine learning and store the generated learning model.

The profile generated as described above is transferred to the three-dimensional shaping apparatus 10 to be used for shaping.

Some constraint conditions may be provided to easily achieve the machine learning and the generation of a profile. According to the embodiment, the supply amounts of energy are limited to the two conditions, i.e., the high density condition and the porous condition. Furthermore, the energy amount is not changed for each layer but is changed for a predetermined number of layers as a unit.

Moreover, only one of the mechanical strength and the distortion may be used as the requirement. This modification enables a learning model to be generated relatively easily.

As described above, the three-dimensional shaping apparatus 10 of the embodiment controls the energy amount of laser irradiation by using the profile set by the profile setting device 20, so as to provide mixed formation of layers formed in the high density condition (hereinafter referred to as "high density layers") and layers formed in the porous condition (hereinafter referred to as "porous layers").

### B. Results of Experiment

The inventors have conducted an experiment for checking the effects of mixing the high density layers with the porous layers on the mechanical strength and the distortion of a shaped object. The results of the experiment are described below.

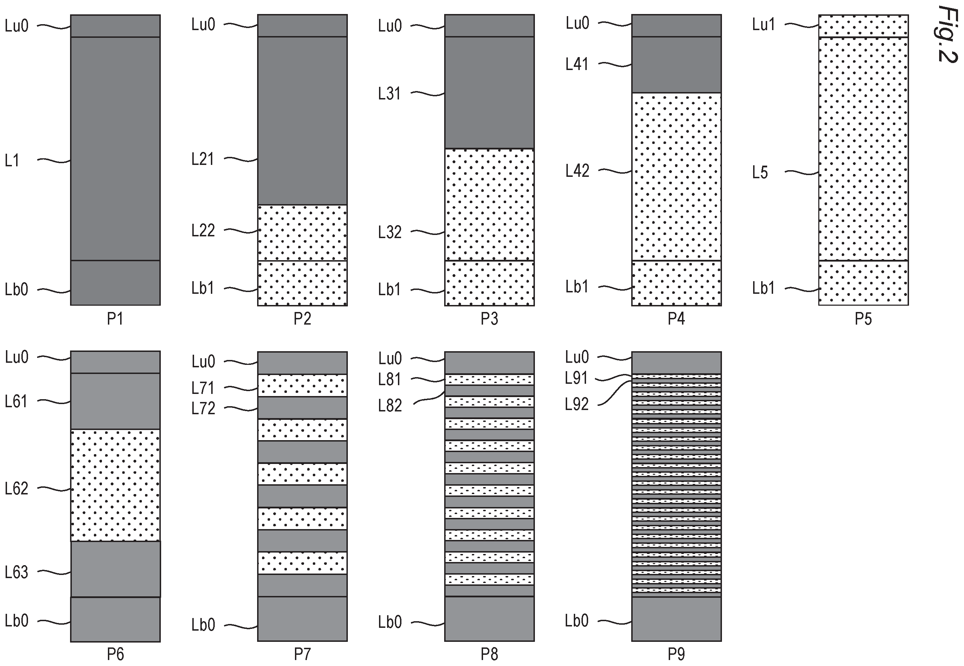

Fig. 2 is an explanatory diagram illustrating examples of shaping according to the embodiment. Fig. 2 schematically illustrates the structures of test pieces P1 to P9 used in the experiment. In the description below, a layer formed at one time by the three-dimensional shaping apparatus 10 is referred to as a "thin layer", and a part where a plurality of thin layers formed under the same conditions are stacked is referred to as a "layer area".

According to the embodiment, the energy amounts of the high density layers and of the porous layers are controlled by changing the scan speed of laser irradiation. More specifically, the scan speed in the process of forming the porous layers is twice the scan speed in the process of forming the high density layers.

The test piece P1 is formed entirely by high density layers. A bottom portion Lb0 is formed by 20 high density layers. An upper portion Lu0 is formed by 10 high density layers. A layer area L1 of a main body is formed by100 high density layers. The ratio of the high density layers in the main body is 100%.

In the test piece P2, a bottom portion Lb1 is formed by 20 porous layers. A main body consists of a layer area L21 formed by 75 high density layers and a layer area L22 formed by 25 porous layers. An upper portion Lu0 is identical with that of the test piece P1. The ratio of the high density layers in the main body is 75%.

In the test piece P3, a bottom portion Lb1 and an upper portion Lu0 are identical with those of the test piece P2. A main body consists of a layer area L31 formed by 50 high density layers and a layer area L32 formed by 50 porous layers. The ratio of the high density layers in the main body is 50%.

In the test piece P4, a bottom portion Lb1 and an upper portion Lu0 are identical with those of the test piece P2. A main body consists of a layer area L41 formed by 25 high density layers and a layer area L42 formed by 75 porous layers. The ratio of the high density layers in the main body is 25%.

In the test piece P5, a bottom portion Lb1 is formed by 20 porous layers, and an upper portion Lu1 is formed by 10 porous layers. A main body has a layer area L5 formed by 100 porous layers. The ratio of the high density layers in the main body is 0%.

In the test piece P6, a bottom portion Lb0 is formed by 20 high density layers, and an upper portion Lu0 is formed by 10 high density layers. In a main body, a layer area L61 formed by 25 high density layers, a layer area L62 formed by 50 porous layers, and a layer area L63 formed by 25 high density layers are stacked in this sequence. The ratio of the high density layers in the main body is 50%.

In the test piece P7, a bottom portion Lb0 is formed by 20 high density layers, and an upper portion Lu0 is formed by 10 high density layers. In a main body, layer areas of 10 high density layers and layer areas of 10 porous layers, such as a layer area L71 formed by 10 high density areas and a layer area L72 formed by 10 porous layers, are stacked alternately. The main body has a total thickness of 100 layers. The ratio of the high density layers in the main body is 50%.

In the test piece P8, a bottom portion Lb0 is formed by 20 high density layers, and an upper portion Lu0 is formed by 10 high density layers. In a main body, layer areas of 5 high density layers and layer areas of 5 porous layers, such as a layer area L81 formed by 5 high density areas and a layer area L82 formed by 5 porous layers, are stacked alternately. The main body has a total thickness of 100 layers. The ratio of the high density layers in the main body is 50%.

In the test piece P9, a bottom portion Lb0 is formed by 20 high density layers, and an upper portion Lu0 is formed by 10 high density layers. In a main body, layer areas of 2 high density layers and layer areas of 2 porous layers, such as a layer area L91 formed by 2 high density areas and a layer area L92 formed by 2 porous layers, are stacked alternately. The main body has a total thickness of 100 layers. The ratio of the high density layers in the main body is 50%.

As described above, the high density layers and the porous layers may be formed in any of various configurations according to the embodiment. For example, the high density condition and the porous condition may be changed only once in the process of stacking to form a shaped object, like the test pieces P2 to P4. In another example, the high density condition and the porous condition may be changed twice or more, like the test piece P6, or the high density layers and the porous layers may be formed alternately, like the test pieces P7 to P9.

The configuration of the embodiment selectively uses the two different energy amounts as the high density condition and the porous condition. A wider variety of changeovers are allowed in the case of using three or more different energy amounts.

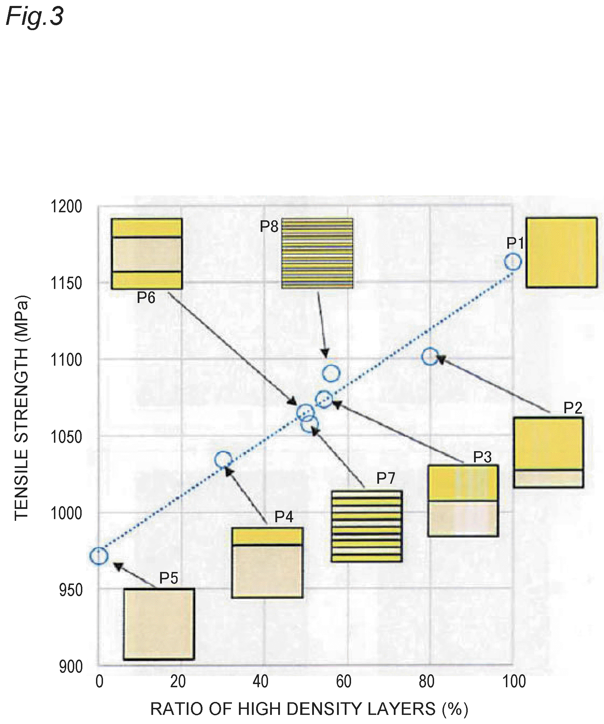

Fig. 3 is an explanatory diagram illustrating the results of an experiment for a tensile strength. Fig. 3 shows a relationship between the ratio of the high density layers and the tensile strength. As illustrated, the tensile strength increases substantially linearly with an increase in the ratio of the high density layers.

It is also shown that when the ratio of the high density layers is approximately 50%, the tensile strength is affected by the thicknesses of the high density layers and the porous layers.

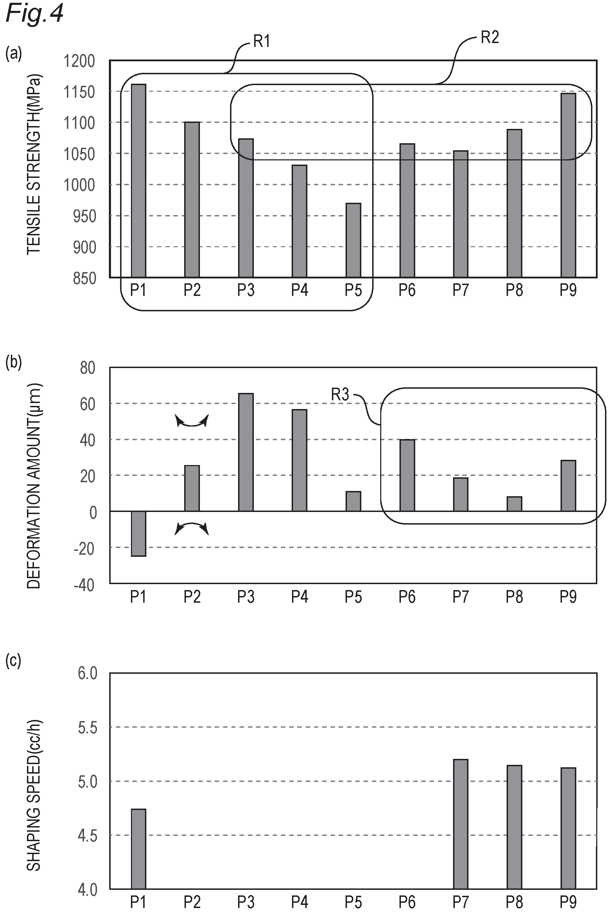

Fig. 4 is an explanatory diagram illustrating the results of experiments for the tensile strength, a deformation amount and a shaping speed.

Fig. 4(a) shows the results of the experiment for the tensile strength. This shows the same results as those of Fig. 3 in a different form.

Results R1 of the test samples P1 to P5 show a gradual decrease of the tensile strength. The test pieces P1 to P5 are provided as test pieces having a gradual decrease in the ratio of the high density layers under a condition that the high density condition and the porous condition are changed once at the maximum. As clearly shown in Fig. 3, with regard to these test pieces, it has been confirmed that the tensile strength substantially linearly varies against the ratio of the high density layers.

Results R2 of the test piece P3 and the test pieces P6 to P9 are examined next. These test pieces have the ratio of the high density layers of approximately 50% but have different thicknesses of the high density layers and the porous layers. According to these results, the test piece P9 formed by the thinnest layers has a tensile strength substantially equivalent to that of the test piece P1. In the test pieces P7 to P9, the thickness of the layers is gradually thinned. In terms of the tensile strength, it may be thought that the smaller thickness of the respective layers is preferable. The test piece P7 having the thinner layers than those of test piece P6, however, has a slightly lower tensile strength than that of the test piece P6. It is accordingly not sure that the tensile strength has a linear relationship to the thickness of layers.

Fig. 4(b) shows the results of the experiment for the deformation amounts of the test pieces. The positive side indicates upward concave deformation, and the negative side indicates downward concave deformation. Results R3 of the test pieces P6 to P9 show that the deformation amount is affected by the thickness of the layer area even at the same ratio of the high density layers of 50%. In the test pieces P6 to P8, the deformation amount decreases with a decrease in the thickness of the layer area. The test piece P9 having the thinnest layer area, however, has a larger deformation amount.

According to the results of the test pieces P1 to P5, it is shown that the ratio of the high density layers affects the deformation amount, but the details of the correlation are not elucidated.

The deformation amount is attributed to the residual stress accompanied with heating and cooling in the shaping process. In the case of the powder bed system like this embodiment, the residual stress may be affected by the heat transfer to the shaping table 11. It is accordingly thought that the comprehensive analysis of various factors is required.

Fig. 4(c) shows the results of the experiment for the shaping speeds of the test pieces. This experiment was performed for only the test piece P1 and the test pieces P7 to P9. These results show that the mixed presence of the high density layers and the porous layers in formation like the test pieces P7 to P9 advantageously has the higher shaping speed than that of the formation of only the high density layers as a whole (the test piece P1) since the scan speed of the porous layers is higher than the scan speed of the high density layers. It is, however, also shown that a decrease in the thickness of the respective layers like the test pieces P7 to P9 causes a slight decrease of the shaping speed.

The results of the experiments described above show that changing the ratio of the high density layers to the low density layers and changing the thickness of the respective layers in the case of three-dimensional shaping affects the tensile strength, the deformation amount and the shaping speed. In other words, it is thought that shaping that appropriately meets the requirements for a shaped object, such as a mechanical strength and an allowable range of distortion, is allowed by controlling the energy amount.

### C. Shaping Process

The following describes a process of shaping by the three-dimensional shaping apparatus 10.

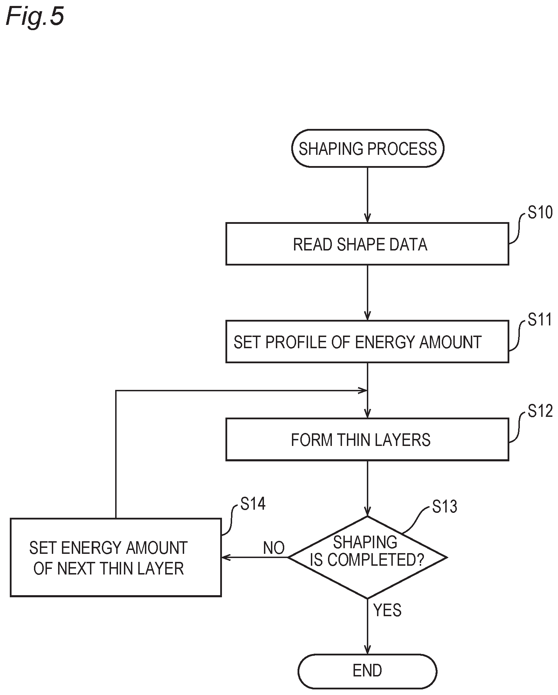

Fig. 5 is a flowchart showing a shaping process. This is a process executed by the controller of the three-dimensional shaping apparatus 10.

On start of the processing, the three-dimensional shaping apparatus 10 first reads shape data of a shaped object (step S10). In the case where a shaped object is configured as a stacked body of thin layers, this shape data is data defining the shapes of the respective thin layers. When the shape data is three-dimensional data of a shaped object, the three-dimensional shaping apparatus 10 is required to generate shape data of thin layers, based on the three-dimensional data.

The three-dimensional shaping apparatus 10 subsequently sets a profile of energy amount (step S11). According to the embodiment, the three-dimensional shaping apparatus 10 reads a profile set by the profile setting device 20 as described later. Alternatively, an operator of the three-dimensional shaping apparatus 10 may manually set the profile.

On conclusion of the above processing, the three-dimensional shaping apparatus 10 starts an actual shaping process. The process first forms a first thin layer (step S12). As described above with reference to Fig. 1, the method of forming a thin layer irradiates metal powder with laser according to the shape data to fuse the metal powder and solidify the fused metal powder. This laser irradiation is performed either in the high density condition or in the porous condition according to the profile.

After formation of a thin layer, in the case where shaping is not completed yet (step S13), the three-dimensional shaping apparatus 10 sets an energy amount of a next thin layer according to the profile (step S14). This process does not mean that a changeover of the energy amount is necessary for each layer. When the laser irradiation is performed with the same energy amount for a next layer, there is no need to change over the energy amount.

The three-dimensional shaping apparatus 10 repeatedly performs the above series of processing until shaping is completed (step S13).

According to the embodiment, the profile of the energy amount is set by machine learning. The following describes a method of setting the profile.

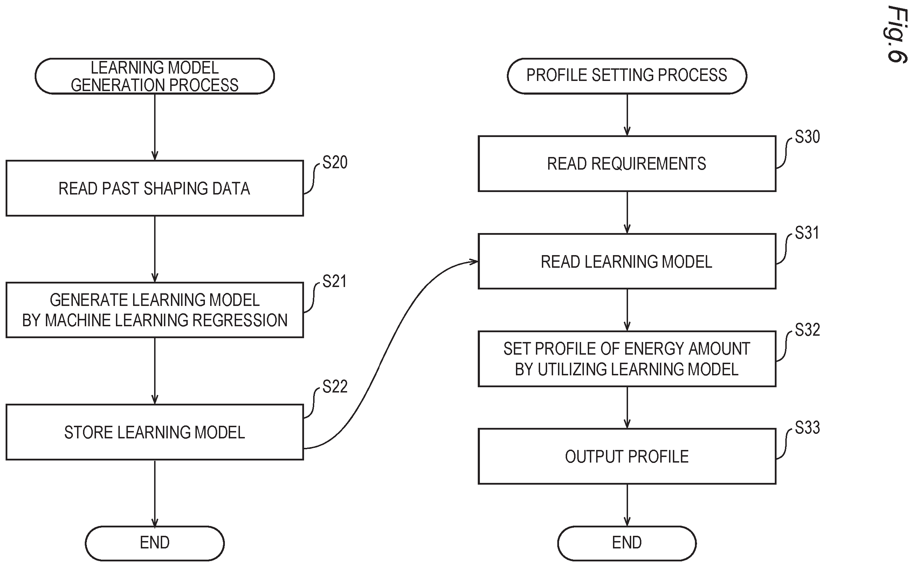

Fig. 6 is a flowchart showing a learning model generation process and a profile setting process. These are processes performed by the profile setting device 20. As described above with reference to Fig. 1, however, the profile setting device 20 is not necessarily configured by a single integral device but may be configured by connection of a plurality of computers, servers and the like via a network.

The learning model generation process performed by the profile setting device 20 is described first. On start of processing, the profile setting device 20 first reads past shaping data from the shaping database (step S20). The shaping data may be, for example, the shape of a shaped object, the mechanical strength of the shaped object, the magnitude of distortion in a shaping process, and a profile used for shaping.

The profile setting device 20 generates a learning model by machine learning regression (step S21) and stores the generated learning model (step S22).

This learning model is used to provides a profile implementing requirements, such as a mechanical strength and a magnitude of distortion in a shaping process, when these requirements are given. Any of various methods may be employed for an algorithm to generate the learning model.

The profile setting process is described next. This process is performed to set a profile when a shaped object is to be formed.

On start of processing, the profile setting device 20 first reads requirements (step S30). The requirements may be, for example, a mechanical strength and an allowable range of distortion with regard to the shape of the shaped object.

The profile setting device 20 subsequently reads the learning model generated by the learning model generation process (step S31). The profile setting device 20 then utilizes this learning model to set a profile of the energy amount (step S32). The set profile is output to the three-dimensional shaping apparatus 10 (step S33).

In the above series of processing, it is not necessary to generate a learning model when the profile setting process is executed, but the learning model may be generated in advance. The learning model that has been generated once may be used repeatedly.

The configuration of the embodiment described above causes layers of different energy amounts in the high density condition and in the porous condition to be mixed in a shaping process of fusing the metal powder and solidifying the fused metal powder and thereby suppresses a distortion caused by the residual stress. The profile may be set to suppress the distortion, while meeting the requirement of the mechanical strength. Accordingly, the configuration of the embodiment improves the accuracy of shaping in three-dimensional shaping and enhances the convenience of three-dimensional shaping.

Furthermore, the configuration of the embodiment sets a profile by machine learning. This configuration enables a suitable profile that meets the requirements, such as the mechanical strength and the distortion, to be set.

The three-dimensional shaping apparatus may not necessarily be provided with all the variety of features described in the embodiment, and these features may be partly omitted or combined appropriately. The present disclosure may not be limited to the embodiment but may be configured as a variety of modifications.

For example, the energy amount is not limited to the two different conditions, i.e., the high density condition and the porous condition, described in the embodiment, but a wider range of conditions may be provided for the energy amount.

The present disclosure is not limited to the powder bed system as described in the embodiment but is applicable to a variety of shaping methods that fuse powder and solidify the fused powder.

### Industrial Applicability

The present disclose is applicable to suppress deformation occurring in a shaping process with regard to a method of three-dimensional shaping by stacking thin layers that are formed by fusing powder and solidifying the fused powder.

### Reference Signs List

- 10: three-dimensional shaping apparatus
- 11: shaping table
- 12: moving mechanism
- 13: recoater
- 15: laser irradiation unit
- 16: controller
- 17: input unit
- 20: profile setting device
- 21: shaping database
- 22: requirement input portion
- 23: machine learning portion
- 24: profile generating portion

## Claims

1. A three-dimensional shaping method of forming a three-dimensional shaped object, the three-dimensional shaping method comprising:
(a) a step of defining a shape of each thin layer, in order to form the shaped object by thin layers of predetermined thicknesses;
(b) a step of providing a predetermined energy amount to powder to fuse the powder and solidifying the fused powder to form a thin layer according to the defined shape;
(c) a step of repeating the step (b) to stack a next thin layer on a formed thin layer;
(d) a step of controlling the energy amount in each repetition of the step (b), such as to cause two or more different layer areas having different energy amounts to be mixed in a direction of stacking; and
(f) a step of setting the energy amount that is to be provided to each thin layer, according to an allowable range of distortion that is allowed for the shaped object,
wherein the step (d) controls the energy amount according to a result of setting of the step (f).

2. The three-dimensional shaping method according to claim 1,
wherein the step (d) forms a plurality of the thin layers with a first energy amount and subsequently changes over the energy amount to a second energy amount.

3. The three-dimensional shaping method according to claim 1,
wherein the step (d) changes over the energy amount at least twice in a shaping process.

4. The three-dimensional shaping method according to claim 1,
wherein the step (d) controls the energy amount, such that a first layer area comprised of thin layers formed with the first energy amount and a second layer area comprised of thin layers formed with the second energy amount are alternately stacked.

5. The three-dimensional shaping method according to claim 1, further comprising:
(e) setting the energy amount that is to be provided to each thin layer, according to a mechanical strength required for the shaped object,
wherein the step (d) controls the energy amount according to a result of setting of the step (e).

6. The three-dimensional shaping method according to claim 1,
wherein the step (b) uses metal powder to stack the thin layer.

7. A three-dimensional shaping apparatus configured to form a three-dimensional shaped object, the three-dimensional shaping apparatus comprising:
an input portion configured to read shape data of each thin layer in order to form the shaped object by thin layers of predetermined thicknesses;
a thin layer forming portion configured to provide a predetermined energy amount to powder to fuse the powder and solidify the fused powder to form a thin layer according to the shape data;
a stacking portion configured to move the thin layer forming portion relative to a formed thin layer, such as to form a next thin layer on the formed thin layer; and
a controller configured to control the energy amount that is provided by the thin layer forming portion, such as to cause two or more different layer areas having different energy amounts to be mixed in a direction of stacking,
wherein the controller sets the energy amount that is to be provided to each thin layer, according to an allowable range of distortion that is allowed for the shaped object, and controls the energy amount according to a result of the setting.

8. In a computer of controlling a three-dimensional shaping apparatus configured to form a three-dimensional shaped object, a program that causes the computer to execute:
(a) a step of receiving an input of a shape of each thin layer, in order to form the shaped object by thin layers of predetermined thicknesses;
(b) a step of controlling such as to provide a predetermined energy amount to powder to fuse the powder and such as to solidify the fused powder to form a thin layer according to the defined shape;
(c) a step of controlling to repeat the step (b) and thereby stack a next thin layer on a formed thin layer;
(d) a step of controlling the energy amount in each repetition of the step (b), such as to cause two or more different layer areas having different energy amounts to be mixed in a direction of stacking; and
(f) a step of setting the energy amount that is to be provided to each thin layer, according to an allowable range of distortion that is allowed for the shaped object,
wherein the step (d) controls the energy amount according to a result of setting of the step (f).
